# EUROPEAN PATENT APPLICATION

(11) **EP 4 772 469 A1**
(43) Date of publication of application: **08.07.2026**
(21) Application number: 24860365.6
(22) Date of filing: 27.08.2024
(51) Int. Cl.: C01B 3/38, C01B 3/50

(54) **REFORMING METHOD OF REDUCING GAS FOR SYNGAS PRODUCTION AND REFORMING PROCESS SYSTEM THEREFOR**

(30) Priority: 30.08.2023 KR 20230114520
(71) Applicant: Poohung Photo-Chemical Co., Ltd., Gyeonggi-do 15434 (KR)
(72) Inventor: KIM, Beom Sik, Daejeon 34140 (KR); WOO, Dong Wook, Daejeon 34070 (KR); JEONG, Hong Gi, Ansan-si Gyeonggi-do 15476 (KR); KIM, Beom Joon, Siheung-si Gyeonggi-do 14995 (KR)
(74) Representative: IPrime Rentsch Kaelin AG
(86) International application number: PCT/KR2024/012743
(87) International publication number: WO 2025/048445

(57) **Abstract**

The present invention relates to a method for reforming reducing gas for producing synthesis gas and a reforming process system therefor. More specifically, the present invention relates to a reforming method suitable for producing synthesis gas through a reforming reaction of the reducing gas by continuously utilizing an oxidizing agent together with a reforming catalyst without process interruption, and a reforming process system using the same.

## Description

### [Technical Field]

The present invention relates to a method for reforming reducing gas for producing synthesis gas (syngas) and a reforming process system therefor. More specifically, the present invention relates to a reforming method suitable for producing synthesis gas through a reforming reaction of the reducing gas by continuously utilizing an oxidizing agent together with a reforming catalyst without process interruption, and a reforming process system using the same.

### [Background Art]

Unless otherwise specified herein, the contents described in this section are not regarded as prior art to the claims of the present application, and their inclusion in this section does not indicate that they constitute prior art.

Recently, energy-related problems have become a significant social issue, and excessive emissions of greenhouse gases associated with carbon dioxide have emerged as a serious environmental problem.

Under the recognition that there is an urgent need to develop and utilize renewable energy sources capable of sustainable growth to secure energy security both domestically and internationally, renewable energy sources are being expanded, and various technologies are being developed to address environmental issues, such as carbon dioxide capture and utilization.

Korea is recognized as a major global greenhouse gas emitter, and international pressure to reduce greenhouse gas emissions is intensifying.

Hydrogen energy is emerging as a key future clean energy source that can simultaneously address environmental issues such as global warming and energy dependence. Securing technology to utilize carbon dioxide as a circulating carbon resource is a key research priority.

Generally, methods for producing synthesis gas, composed of hydrogen and carbon monoxide, include methods using fossil fuels such as natural gas. Among these synthesis gas production methods, from an economic perspective, it is advantageous to utilize biomass such as carbon dioxide and methane gas and to use renewable energy.

Existing methods for producing synthesis gas from biogas include dry reforming, wet reforming, and combined reforming, which are summarized in the following reaction equations depending on the input conditions of carbon dioxide, water, and the like during the reforming reaction of the reducing gas.
Dry reforming: CO₂+ CH_{4→} 2CO + 2H₂ (ΔH = 261 kJ/mol)
Wet reforming: H₂O+ CH_{4→} 3H₂ + CO (ΔH = 226 kJ/mol)
Combined reforming: CO₂+ 3CH₄+ 2H₂O → 4CO + 8H₂ (ΔH = 712 kJ/mol)

Among the reforming reactions using reducing gases described above, dry reforming is a synthesis gas production technology that utilizes the largest amount of CO₂ (a greenhouse gas) as a feedstock among catalytic reforming technologies. Because it has a high effect in reducing greenhouse gases, there is global interest in securing this technology.

In particular, dry reforming requires a higher proportion of CO for chemical product production than other reforming reactions and exerts a significant influence on greenhouse gas reduction. Therefore, efforts are being made to secure advanced reaction technologies.

However, dry reforming uses a catalyst to carry out the reaction, and dry reforming (DRM) technology, which can reduce greenhouse gases, suffers from a critical drawback due to its short catalyst lifetime, making commercialization difficult.

Existing dry reforming catalysts, which can use CO₂ as a feedstock, have been continuously developed for over 100 years. However, their lifetime remains extremely limited due to catalyst surface deactivation.

Accordingly, various studies have been proposed to extend the catalyst lifetime in dry reforming. However, aside from attempting to extend the lifetime by specifying the catalyst composition, technical approaches are lacking. Therefore, process proposals for this dry reforming method have been practically difficult.

Korean Patent Laid-Open Publication No. 10-2022-0129702 proposes a method for producing hydrogen that includes a reactive regeneration process involving a methane-carbon dioxide dry reforming reaction.

In addition, various methods for producing synthesis gas by dry reforming using dry reforming catalysts or by wet or combined reforming reactions have been proposed in the art, but most of them only propose methods that rely on the catalyst composition and do not provide improvements for a continuous series of reaction processes.

Therefore, there is an urgent need for a reforming method and system suitable for application to a reforming process that produces synthesis gas using reducing gases such as methane. In particular, there is a pressing need for a method for producing synthesis gas using a catalyst for an extended period without carbon deposition.

### [Prior Art Document]

### [Patent Document]

(Patent Document 1) Korean Patent Laid-Open Publication No. 10-2022-0129702

### [Summary of Invention]

### [Problems to be Solved by Invention]

The present invention has been made to solve the problems of the conventional art as described above, and a purpose thereof is to provide a method for reforming reducing gas, which is suitable for producing synthesis gas by effectively performing a reforming reaction of reducing gas using a reforming catalyst and, in particular, for continuously performing the reforming process without process interruption, and a system using the same.

Therefore, an object of the present invention is to provide a method for reforming reducing gas for producing synthesis gas by reforming the reducing gas using an oxidizing agent and a reforming catalyst.

Another object of the present invention is to provide a reforming method that enables the reforming reaction of reducing gas to be continuously performed without process interruption, thereby effectively producing synthesis gas.

Yet another object of the present invention is to provide a reforming process system for reducing gas that enables synthesis gas to be produced using a reforming catalyst while replacing the catalyst or removing carbon without process interruption.

The object of the present invention is not limited to the above-described objects, but should be understood to encompass all objects inferred from the detailed description or the claims of the present invention, as well as all objects achievable based on the description or technical concept of the present invention.

### [Means for Solving Problems]

To achieve the above-described objects of the present invention, the present invention provides a method for reforming reducing gas for producing synthesis gas, including the steps of: injecting an oxidizing agent and a reducing gas feedstock; performing a reforming reaction using a reforming catalyst; cooling the synthesis gas obtained from the reforming reaction and recovering waste heat; drying the synthesis gas to remove water; separating the synthesis gas; and returning unreacted materials from the separation step to the feedstock injection step and mixing the unreacted materials with the injected feedstock.

In a preferred embodiment of the present invention, the reducing gas and the oxidizing agent may be injected at a volume ratio of 1:0.5 to 10.

In a preferred embodiment of the present invention, the step of performing the reforming reaction preferably includes arranging the reforming catalyst in a plurality of reaction lines within a reactor so as to form a plurality of flow paths and performing the reforming reaction.

According to a preferred embodiment of the present invention, in the step of performing the reforming reaction, the reaction temperature may be set to 700 to 1200 °C.

According to a preferred embodiment of the present invention, the method may further include a carbon removal step after the reforming reaction.

According to a preferred embodiment of the present invention, the carbon removal step may include a step of removing carbon by adding an oxidizing agent, or a step of physically removing carbon.

According to a preferred embodiment of the present invention, the carbon removal step using an oxidizing agent may include supplying one or more oxidizing agents selected from air, O₂, H₂O, and CO₂ to the synthesis gas generated after the reforming reaction at a temperature of 400 to 800 °C to convert carbon into CO or CO₂, thereby removing the carbon.

According to a preferred embodiment of the present invention, the step of physically removing carbon may include configuring two or more flow lines in parallel for synthesis gas generated after the reforming reaction, such that while carbon accumulated in one of the flow lines is physically removed, the synthesis gas is transferred through another flow line.

According to a preferred embodiment of the present invention, the synthesis gas may be separated into CO and H₂ using one or more selected from PSA, a membrane, and a cold box.

According to a preferred embodiment of the present invention, the metal oxide may be any catalyst useful for a reforming reaction by dry reforming, wet reforming, or combined reforming, and may contain, for example, one or more selected from the group consisting of oxides of nickel, cobalt, iron, copper, vanadium, molybdenum, platinum-based metals, cerium, ruthenium, rhodium, palladium, and zirconium.

The present invention provides a reforming process system for producing synthesis gas using a reforming catalyst, which may be applied to a method for reforming reducing gas as described above. The system includes: a feedstock injection unit configured to inject an oxidizing agent and a reducing gas feedstock; a reforming reactor including a reforming catalyst and configured to perform a reforming reaction of the reducing gas feedstock; a cooler configured to cool synthesis gas obtained from the reforming reaction and recover waste heat; a dryer configured to dry the synthesis gas to remove water; a product separation and purification unit configured to separate the synthesis gas; and a circulation line configured to return unreacted materials from the product separation and purification unit to the feedstock injection unit and mix the unreacted materials with the injected feedstock.

According to a preferred embodiment of the present invention, the system may further include an oxidizing agent addition unit or a physical removal unit between the reforming reactor and the cooler as a carbon removal means.

### [Advantageous Effects]

As described above, the method for reforming reducing gas according to the present invention employs a process configuration that has not been previously proposed and applies a reforming reaction process capable of long-term operation without carbon deposition, thereby achieving an effect of being economically applicable to a reducing gas reforming process.

In particular, the reforming reaction process of the present invention is capable of continuously performing the reforming reaction using a catalyst without process interruption, thereby enabling large-scale carbon-utilizing reaction processes, such as producing hydrogen using carbon-reactive greenhouse gases including carbon dioxide and methane, to be carried out in an automated manner.

Therefore, the present invention has high practical value in that it provides a method for reforming reducing gas and a reforming process system as an environmentally friendly manufacturing process that reduces greenhouse gas emissions and achieves carbon neutrality.

### [Brief Description of Drawings]

FIG. 1 is a schematic view illustrating a process diagram to which a reforming method according to the present invention is applied.
FIG. 2 is a conceptual view illustrating a plurality of catalyst arrangement states, showing an example in which reforming catalysts are arranged in parallel in three reaction lines in a reforming process system according to the present invention.
FIG. 3 is a partial process diagram illustrating a process of removing carbon using an oxidizing agent by configuring synthesis gas flow lines in parallel according to the present invention.
FIG. 4 is a partial process diagram illustrating a process of physically removing carbon by configuring synthesis gas flow lines in parallel according to the present invention.
FIG. 5 is a graph illustrating experimental results according to a reforming reaction in an experimental example of the present invention, comparing conversion results of respective components in a reaction temperature range and changes in the amount of each component depending on the reaction temperature.

### [Mode for Carrying out Invention]

Hereinafter, the present invention will be described in more detail by way of one embodiment.

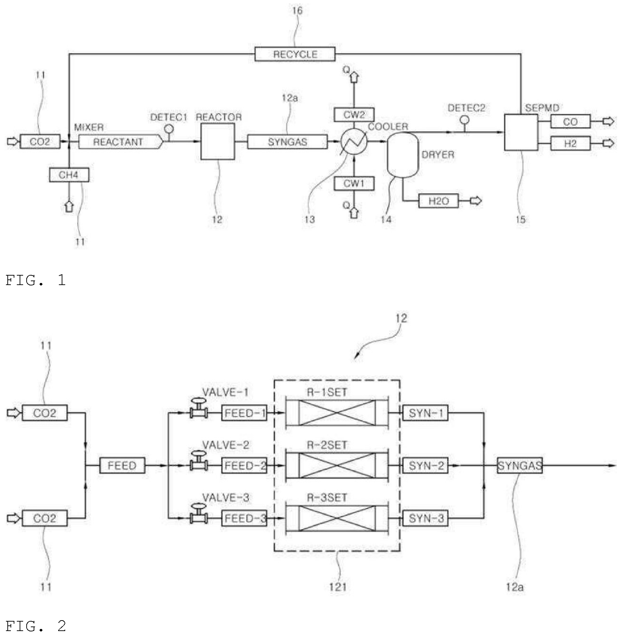

The present invention relates to a method for reforming reducing gas using a reforming catalyst, as illustrated in the process diagram of FIG. 1.

In the present invention, the reducing gas used as a raw material is defined as a reducing agent for components used in a carbon-reactive system, such as producing synthesis gas by reducing CO₂, and generally refers to a gaseous substance. Such reducing gases include hydrocarbons such as methane, ethane, and propane, or a mixture thereof, or compounds in which these are mixed. Examples of the reducing gas may include a mixture containing CH₄, CO₂, H₂, O₂, and N₂.

In addition, reducing gases may typically include biogas, industrial by-product gases generated from industrial activities, mixed gases, greenhouse gases such as methane, unreacted materials generated in factories, byproducts, and volatile organic compounds. Examples of biogas may include methane, ethane, propane, butane, alcohols, ketones, and aldehydes.

In the present invention, the oxidizing agent refers to a substance capable of reacting with the reducing gas to cause a reforming reaction, and for example, one or more selected from air, O₂, H₂O, and CO₂ may be used. Most preferably, one or more of H₂O and CO₂ may be used. The oxidizing agent in the present invention may be involved in a reforming reaction process of the reducing gas in which carbon deposition occurs.

In the present invention, as the oxidizing agent and the reducing gas used as raw materials for the reforming reaction, for example, carbon dioxide and methane, or carbon dioxide, water, and methane may be used as raw materials for typical dry reforming or combined reforming reactions.

According to a preferred embodiment of the present invention, such raw materials may be injected into the reaction process at a predetermined ratio for the reforming reaction.

According to a preferred embodiment of the present invention, when the reducing gas and the oxidizing agent are injected as raw materials at a volume ratio of 1:0.5 to 10, excellent conversion efficiency of the reducing gas may be obtained. If the ratio is outside the above range, the conversion efficiency may be significantly reduced. In addition, when the amount of the oxidizing agent is less than that of the reducing gas, carbon formation may rapidly increase, and when the amount of the oxidizing agent is excessively high, economic efficiency in a separation and purification section may decrease, and as the flow rate increases, product yield may decrease.

According to the present invention, after the raw materials are injected, the reducing gas undergoes a reforming reaction.

According to a preferred embodiment of the present invention, in the step of performing the reforming reaction, the reaction temperature may be set to 700 to 1,200 °C, more preferably set in a range of 800 to 1,000 °C.

According to a preferred embodiment of the present invention, the reforming reaction is performed in the presence of a reforming catalyst, and the reforming catalyst is preferably one that does not cause carbon deposition.

According to a preferred embodiment of the present invention, the method preferably includes arranging the reforming catalyst in a plurality of reaction lines within a reactor so as to form a plurality of flow paths and performing the reforming reaction.

In such a catalyst arrangement method, for example, when a three-catalyst arrangement structure illustrated in FIG. 2 is used, a reforming reaction is performed in a first arrangement, and a second arrangement may be replaced when the first arrangement is used for a long period of time or when reaction conditions deteriorate. The second arrangement may be used as a replacement arrangement by switching a reforming reaction line, thereby enabling the reforming reaction to be continuously performed. In addition, a third arrangement may be prepared in advance and used as a spare.

According to the present invention, in some cases, the plurality of catalyst reaction lines may be arranged as two lines or four or more lines, and when three or more lines are arranged as shown in FIG. 2, the reforming reaction may be performed in two or more of the lines, while the remaining lines may be utilized as replacement lines, spare lines, or the like.

According to a preferred method of the present invention, after the reforming reaction using the catalyst is completed, a step of cooling synthesis gas obtained from the reforming reaction and recovering waste heat is performed. Such waste heat recovery is significant in that the recovered waste heat may be utilized as an energy source.

According to the present invention, after recovering waste heat from products generated after the reforming reaction as described above, a drying process is performed to remove water generated as a reaction product.

On the other hand, a product separation step of separating synthesis gas generated from the reforming reaction is performed, and unreacted materials from the separation step may be returned to the feedstock injection step and circulated through a circulation line, thereby being mixed with the injected feedstock.

According to a preferred embodiment of the present invention, the generated synthesis gas may be separated into high-purity CO and H₂ using one or more selected from PSA, a membrane, and a cold box.

Meanwhile, in the reforming reaction process of the present invention, a reforming catalyst is used. According to a preferred embodiment of the present invention, the reforming catalyst may be a catalyst in which a metal oxide catalyst is dispersed on a support.

According to the present invention, the metal oxide may contain one or more selected from the group consisting of oxides of nickel, cobalt, iron, copper, vanadium, molybdenum, platinum-based metals, cerium, ruthenium, rhodium, palladium, and zirconium.

In particular, the present invention has confirmed that, in the case of a reforming catalyst, deactivation of a catalyst surface and damage to a catalyst structure are caused by carbon deposition (coking). Therefore, the present invention applies a method for removing such carbon deposition and enables the reforming reaction to be continuously performed without process interruption for catalyst replacement.

The present invention includes a system for reforming reducing gas that may utilize the method for reforming reducing gas as described above.

A preferred reforming process system according to the present invention may have a configuration as shown in FIG. 1. For ease of understanding, FIG. 1 illustrates, as an example, a case in which carbon dioxide is used as an oxidizing agent and methane is used as a reducing gas.

The system of the present invention includes, for example, a feedstock injection unit 11 configured to inject an oxidizing agent and a reducing gas feedstock; a reforming reactor 12 including a reforming catalyst and configured to perform a reforming reaction of the reducing gas feedstock; a cooler 13 configured to cool synthesis gas 12a obtained from the reforming reaction and recover waste heat; a dryer 14 configured to dry the synthesis gas to remove water; a product separation and purification unit 15 configured to separate the generated gas; and a circulation line 16 configured to return unreacted materials from the product separation and purification unit to the feedstock injection unit and mix the unreacted materials with the injected feedstock.

According to a preferred embodiment of the present invention, the catalyst used in the reforming reactor 12 may include a structure arranged in a plurality of lines, for example. A typical example of such a configuration is shown in FIG. 2. Here, the reforming reaction of carbon dioxide and methane is illustrated as an example. When the catalyst is arranged in the plurality of reaction lines, each catalyst arrangement line may be selectively used as a reaction line, a replacement line, or a spare line during performance of the reforming reaction.

According to a preferred embodiment of the present invention, the system may further include a sensor for monitoring an amount of reaction raw materials injected into the reforming reactor 12, and a detection sensor for detecting a replacement timing of the reforming catalyst in advance.

In addition, according to a preferred embodiment of the present invention, the method may further include a carbon removal step after the reforming reaction. Since carbon may be generated due to Boudouard reactions during the reforming reaction, such carbon is removed so that a product transfer line is not blocked and stable operation can be maintained.

Therefore, as shown in FIG. 2 of the present invention, reforming catalyst installation portions 121 corresponding to portions in which carbon inevitably accumulates due to side reactions at a specific temperature are installed in parallel, and when carbon accumulates in one of the portions in an amount equal to or greater than a predetermined level, the product is allowed to flow to another portion while excluding the corresponding portion. For the portion previously used, a system for removing carbon by adding an oxidizing agent may be applied. The oxidizing agent that may be used includes one or more selected from air, O₂, H₂O, and CO₂, and a supply line for the oxidizing agent may be configured to pass through a heating means such as a burner so as to be preheated to a temperature equal to or higher than that required for carbon removal.

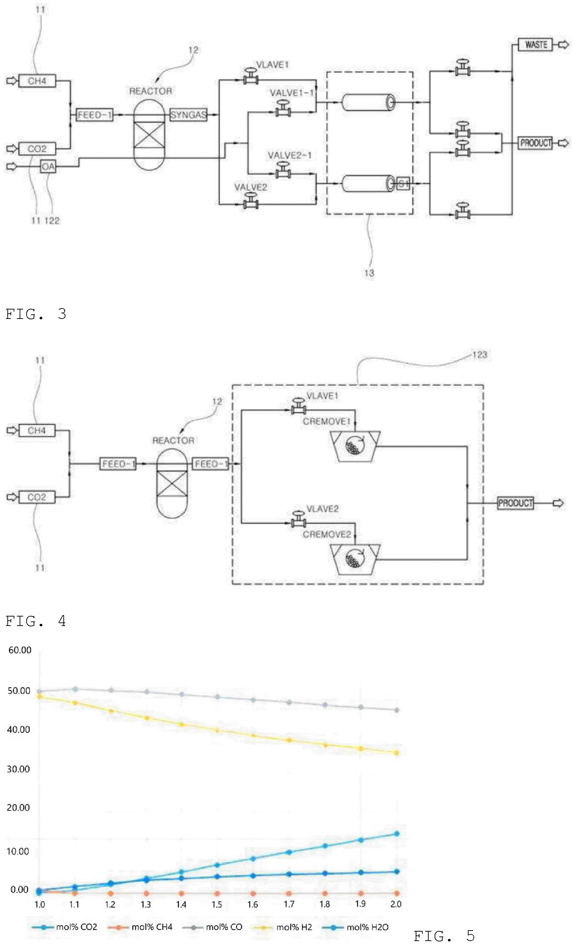

According to a preferred embodiment of the present invention, the carbon removal step may include, for example, a step of removing carbon by adding an oxidizing agent 122 as shown in FIG. 3, or a step of physically removing carbon by a method shown in FIG. 4. Here, a reforming reaction of carbon dioxide and methane is illustrated as an example.

According to a preferred embodiment of the present invention, the carbon removal step using an oxidizing agent may include supplying one or more oxidizing agents selected from air, O₂, H₂O, and CO₂ to the synthesis gas generated after the reforming reaction at a temperature of 400 to 800 °C to convert carbon into CO or CO₂, thereby removing the carbon. More preferably, the oxidizing agent is supplied at a temperature of 500 to 600 °C to remove carbon. If the temperature is too low, an oxidation reaction by the oxidizing agent may not sufficiently occur, making carbon removal difficult, and if the temperature is too high, reaction heat generated during the oxidation process may be added, thereby causing excessive thermal load on equipment. In addition, air is preferably used as the oxidizing agent in terms of operational stability.

According to a preferred embodiment of the present invention, in order to remove carbon deposited on the catalyst during the reforming process, for example, a carbon removal means may be disposed between the reforming reactor and the cooler, and the carbon removal means may include an oxidizing agent addition unit configured to form a plurality of product transfer lines each having a valve, such that while carbon is removed by supplying an oxidizing agent through one transfer line (VALVE1), a product is supplied through another transfer line (VALVE2), and such processes are alternately and repeatedly performed.

To this end, a process as shown in FIG. 3 may be performed. FIG. 3 is a partial process diagram illustrating a process of removing carbon using an oxidizing agent by configuring synthesis gas flow lines in parallel according to the present invention. Here, as an example, the reforming reaction of carbon dioxide and methane is illustrated.

Referring to FIG. 3, a product obtained after reforming while passing through a dry reforming reactor is transferred to a cooler through VALVE1. When carbon accumulates in downstream equipment of VALVE1, such as between the reforming reactor and the cooler or in the cooler, continuous process operation becomes difficult. Accordingly, VALVE1 may be closed and the product may be transferred through VALVE2. In this manner, the product transfer line is switched so that the product is transferred through the transfer line of VALVE2.

At this time, VALVE1-1 is opened to supply an oxidizing agent (OA, 122) to downstream equipment of the VALVE1 line in which carbon has been deposited. In order to raise the temperature to a level required for removing carbon deposited in the downstream equipment while supplying the oxidizing agent, the oxidizing agent may be supplied after passing through a burner so as to increase its temperature.

Through this process, when carbon deposited in downstream equipment of the transfer line of VALVE1 is removed, VALVE1 and VALVE1-1 are maintained in a closed state, and the system is kept on standby until carbon is again deposited in downstream equipment of the transfer line of VALVE2, which is an opposite transfer line.

According to a preferred method of the present invention, during the reforming process, a product transfer line may be operated such that VALVE2 is used as the transfer line during carbon removal in the transfer line of VALVE1, and conversely, VALVE1 is used as the transfer line during carbon removal in the transfer line of VALVE2.

In this manner, according to a preferred embodiment of the present invention, the transfer lines of VALVE1 and VALVE2 are alternately used so that carbon is removed in one transfer line while product transfer is performed in the other transfer line, thereby enabling continuous operation without interruption of product transfer.

FIG. 4 illustrates an example in which a physical method is used for carbon removal. Here, a reforming reaction of carbon dioxide and methane is illustrated as an example.

According to a preferred embodiment of the present invention, when a physical carbon removal step is used as illustrated in FIG. 4, flow lines 123 for synthesis gas 12a generated after the reforming reaction are configured in two or more parallel flow lines, preferably two parallel flow lines, such that while carbon accumulated in one of the flow lines is physically removed, the synthesis gas is transferred through another flow line. When three flow lines are configured, one of the flow lines may be used as a spare, and when two flow lines 123 are configured, carbon may be physically removed from a flow line in which carbon deposition occurs first, while maintaining a flow of synthesis gas through the other flow line.

According to a preferred embodiment of the present invention, the physical carbon removal method used herein may be performed using, for example, a method of directly scraping carbon using a brush, or a cartridge-type method in which a cartridge is directly replaced.

Thus, when performing a reforming reaction on a reducing gas using the reforming method and reforming process system according to the present invention, carbon may be continuously removed without process interruption even when carbon deposition occurs. In addition, more preferably, dry reforming may be continuously performed without process interruption even during a process of removing or replacing carbon.

Therefore, the reforming method is highly useful and economical for reforming oxidizing agent and reducing gas feedstocks, and enables an automated, large-scale, continuous reaction process to be carried out.

Therefore, according to a preferred embodiment of the present invention, as a preferred example of application of the method for reforming reducing gas and the reforming process system of the present invention, when methane as a reducing gas is reformed using carbon dioxide as an oxidizing agent, a highly effective dry reforming or combined reforming process may be applied, thereby enabling realization of carbon neutrality and utilization of greenhouse gases, and allowing the process to be performed as a large-scale, automated, continuous process, such that the process may be utilized as a highly useful industrial process.

Hereinafter, the present invention will be described in detail with reference to examples, but the present invention is not limited to the examples.

### <Example>

A dry reforming reaction was performed using carbon dioxide and methane as raw materials at composition ratios as shown in Table 1 below. As a catalyst used in the reaction, a nickel-cobalt catalyst (nickel:cobalt = 1:5) was used.

The dry reforming reaction was performed using a process line prepared with the process equipment shown in FIG. 1, and the reforming reaction was carried out according to the following reaction equations.

[Reaction equation] CH₄ decomposition: CH₄ ↔ C(s) + 2H₂ CO disproportionation: 2CO ↔ C(s) + CO₂ CO₂ gasification: C + CO₂ ↔ 2CO

According to the process diagram of FIG. 1, the reaction was carried out as follows:
a) CO₂: a CO₂ supply line 11
b) CH₄: an LNG supply line 11
c) MIXER: a portion where CO₂, CH₄, and unreacted materials separated from the SEPMD are mixed
d) REACTANT: a transfer line for injecting reactants from the MIXER into the reactor
e) REACTOR: the reforming reactor 12
f) SYNGAS: a line through which the synthesis gas 12a generated in the reforming reactor is transferred to the cooler 13 and the dryer 14
g) COOLER: the cooler 13 configured to cool high-temperature synthesis gas and recover waste heat
h) DRYER: the dryer 14 serving as a water removal device for the SEPMD
i) H₂O: a line for transferring water removed by the DRYER
j) SEPMD: a separator 15 serving as a synthesis gas separation module configured to separate CO and H₂ to desired purities by selecting a PSA separation method
k) CO: a line for transferring high-purity CO separated from the SEPMD
l) H₂: a line for transferring high-purity H₂ separated from the SEPMD
m) RECYCLE: a circulation line 16 for transferring unreacted materials separated from the SEPMD to the reforming reactor
n) DETEC1: a device configured to analyze a composition of reactants in real time
o) DETEC2: a device configured to analyze a composition of products from which water has been removed in real time
p) CW1, CW2: lines for transferring cooling water

In the above process, in order to supply reactants and collect products suitable for continuous operation, based on real-time analysis results of DETEC1, an amount of CO₂ supplied was adjusted, thereby controlling a product ratio and a reactant ratio of CO₂ and CH₄ capable of preventing carbon deposition, so that a stable continuous process was achieved.

In addition, a sensor capable of detecting a catalyst replacement timing in advance was installed, and based on real-time analysis results of DETEC2, when a CH₄ concentration reached 80% of a maximum CH₄ concentration required by the SEPMD, flow rates of CO₂ and CH₄ were reduced to maintain operation, and when a production amount fell below a desired production level, the catalyst was replaced.

A reaction temperature of the reforming reactor was maintained in a range of 800 to 1000 °C, and after the reaction, the reaction products CO and H₂ were separated with high purity.

### <Experimental Example>

With respect to results of a reforming reaction performed using the above-described method and system, a composition of reaction products obtained at a reactor outlet according to a feedstock ratio is shown in Table 1 below.

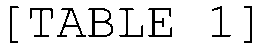

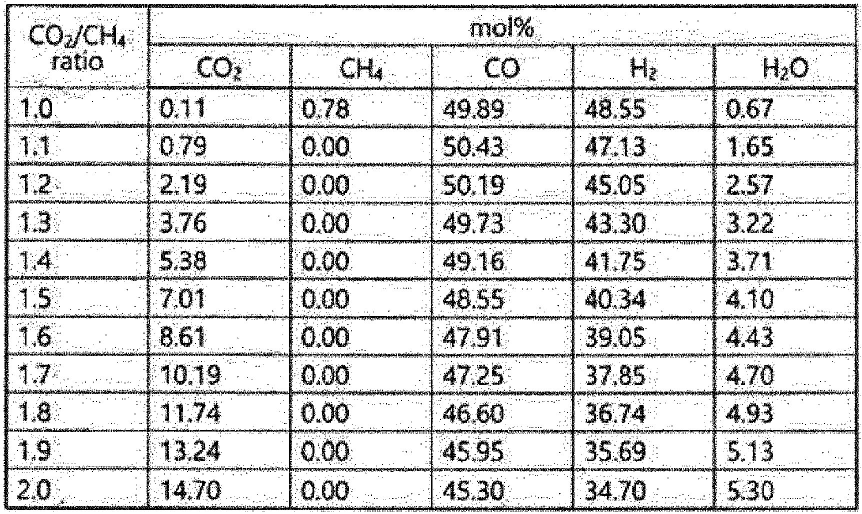

Based on the results for compositions of respective components over a reaction temperature range in the dry reforming reaction, changes in an amount of each component depending on the reaction temperature are shown in the graph of FIG. 5.

### [Description of Reference Numerals]

- 11 -: Feedstock injection line
- 12 -: Reforming reactor
- 12a -: Synthesis gas
- 13 -: Cooler
- 14 -: Dryer
- 15 -: Separator
- 16 -: Circulation line
- 121 -: Reforming catalyst installation portion
- 122 -: Oxidizing agent
- 123 -: Flow line

## Claims

1. A method for reforming reducing gas for producing synthesis gas, comprising the steps of:
injecting an oxidizing agent and a reducing gas feedstock;
performing a reforming reaction using a reforming catalyst;
cooling the synthesis gas obtained from the reforming reaction and recovering waste heat;
drying the synthesis gas to remove water;
separating the synthesis gas; and
returning unreacted materials from the separation step to the feedstock injection step and mixing the unreacted materials with the injected feedstock.

2. The method according to claim 1, wherein methane gas as the reducing gas and carbon dioxide as the oxidizing agent are injected at a volume ratio of 1:0.5 to 10.

3. The method according to claim 1, wherein the step of performing the reforming reaction includes arranging the reforming catalyst in a plurality of reaction lines within a reactor so as to form a plurality of flow paths and performing the reforming reaction.

4. The method according to claim 1, wherein, in the step of performing the reforming reaction, the reaction temperature is set to 700 to 1200 °C.

5. The method according to claim 1, comprising supplying one or more oxidizing agents selected from air, O₂, H₂O, and CO₂ to the synthesis gas generated after the reforming reaction at a temperature of 400 to 800 °C to convert carbon into CO or CO₂, thereby removing the carbon.

6. The method according to claim 1, comprising configuring two or more flow lines in parallel for synthesis gas generated after the reforming reaction, such that while carbon accumulated in one of the flow lines is physically removed, the synthesis gas is transferred through another flow line.

7. The method according to claim 1, wherein the synthesis gas is separated using one or more selected from PSA, a membrane, and a cold box.

8. A reforming process system for producing synthesis gas using a reforming catalyst, comprising:
a feedstock injection unit configured to inject an oxidizing agent and a reducing gas feedstock;
a reforming reactor including a reforming catalyst and configured to perform a reforming reaction of the reducing gas feedstock;
a cooler configured to cool synthesis gas obtained from the reforming reaction and recover waste heat;
a dryer configured to dry the synthesis gas to remove water;
a product separation and purification unit configured to separate the synthesis gas; and
a circulation line configured to return unreacted materials from the product separation and purification unit to the feedstock injection unit and mix the unreacted materials with the injected feedstock.

9. The system according to claim 8, further comprising an oxidizing agent addition unit or a physical removal unit between the reforming reactor and the cooler as a carbon removal means.

10. The system according to claim 9, wherein the carbon removal means comprises an oxidizing agent addition unit configured to form a plurality of product transfer lines each having a valve, such that while carbon is removed by supplying an oxidizing agent through one transfer line, a product is supplied through another transfer line, and such processes are alternately and repeatedly performed.
